Europäisches Patentamt

European Patent Office

Office européen des brevets

(11) Veröffentlichungsnummer: **0 478 959 A2**

# EUROPÄISCHE PATENTANMELDUNG

(21) Anmeldenummer: **91114527.4**

(22) Anmeldetag: **29.08.91**

(51) Int. Cl.⁵: **H02M 7/537**

(30) Priorität: **03.10.90 DE 4031178**

(43) Veröffentlichungstag der Anmeldung:
**08.04.92 Patentblatt 92/15**

(84) Benannte Vertragsstaaten:
**BE ES FR GB IT**

(71) Anmelder: **AEG-Elotherm GmbH**
**Hammesberger Strasse 31**
**W-5630 Remscheid-Hasten(DE)**

(72) Erfinder: **Sterling, Michael, Dipl.-Ing.**
**Altenbacher Weg 1b**
**W-5653 Leichlingen 2(DE)**
Erfinder: **Busch, Bernd, Dipl.-Ing.**
**Burger Strasse 284**
**W-5630 Remscheid(DE)**

(74) Vertreter: **Patentanwaltsbüro Cohausz &**
**Florack**
**Schumannstrasse 97**
**W-4000 Düsseldorf 1(DE)**

(54) **Parallelschwingkreisumrichter mit frequenzkorrigierter Transistorstromüberwachung.**

(57) Die Erfindung betrifft einen Parallelschwingkreisumrichter mit einem vom Netz versorgten Gleichrichter und einem vom Gleichrichter über einen Zwi-schenkreis gespeisten Umrichter, dessen Diagonal-zweige durch Transistoren gebildet werden und an dessen Brückenzweig als Last ein Schwingkreis angeschlossen ist, wobei für jeden Diagonalzweig jeweils eine Strommeßeinrichtung und eine ihr zugeordnete Überwachungseinrichtung vorgesehen sind, mittels der der Transistor bei Überschreitung eines vorgebbaren Grenzstromes abschaltbar ist. Damit der Umrichter über seinen gesamten Frequenzbe-reich hin mit möglichst guter Auslastung der Transi-storen betrieben werden kann, ohne daß diese über-lastet werden, ist erfindungsgemäß vorgesehen, daß der Überwachungseinrichtung eine Korrektureinrichtung für den Grenzstrom vorgeordnet ist, mittels der der vorgebbare Grenzstrom bei jeder Betriebsfrequenz des Umrichters derart korrigierbar ist, daß er um einen vorgebbaren Differenzwert vom bei der jeweiligen Frequenz maximal zulässigen Grenz-strom abweicht.

Fig.3

EP 0 478 959 A2

Die Erfindung betrifft einen Parallelschwingkreisumrichter mit einem vom Netz versorgten Gleichrichter und einem vom Gleichrichter über einen Zwischenkreis gespeisten Wechselrichter, dessen Diagonalzweige durch Transistoren gebildet werden und an dessen Brückenzweig als Last ein Schwingkreis angeschlossen ist, wobei für jeden Diagonalzweig jeweils eine Strommeßeinrichtung und eine ihr zugeordnete Überwachungseinrichtung vorgesehen sind, mittels der der Transistor bei Überschreitung eines vorgebbaren Grenzstromes abschaltbar ist.

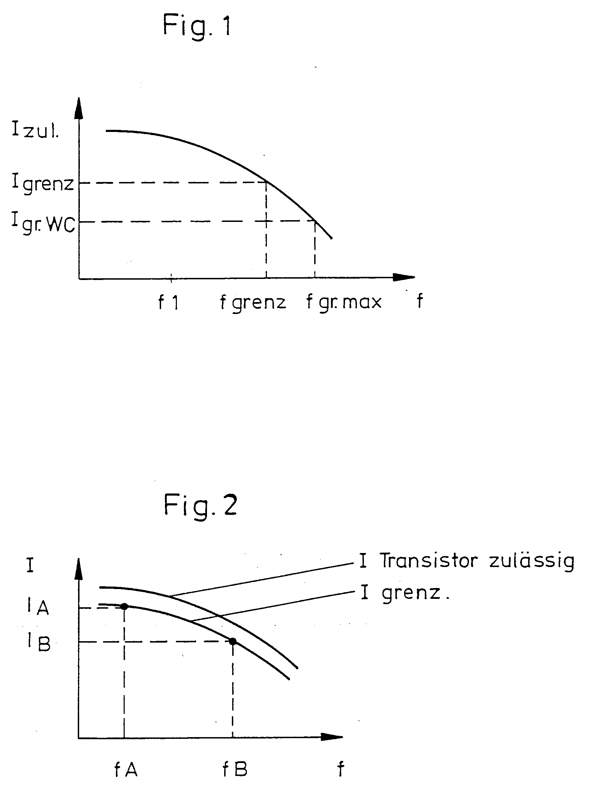

Umrichter dieser Art sind bekannt. Um eine Überlast der Transistoren in den einzelnen Diagonalzweigen des Umrichters zu vermeiden, ist eine Überwachungseinrichtung vorgesehen, welche den Iststrom des jeweiligen Transistors mit einem als Sollwert vorgegebenen Grenzstrom vergleicht und den Transistor abschaltet, sobald der Iststrom den Grenzstrom-Sollwert überschreitet. Da die für die Umrichterleistung maßgebliche maximal zulässige Transistorverlustleistung eine mit der Betriebsfrequenz abfallende Funktion ist (vergleiche Figur 1) wird der Sollwert für den Grenzstrom bei dem bekannten Umrichter auf einen solchen Wert festgelegt, daß bei der höchsten möglichen Betriebsfrequenz des Umrichters der entsprechend der maximal zulässigen Transistorverlustleistung maximal zulässige Transistorstrom nicht überschritten wird. Hierdurch ist gewährleistet, daß eine Überlastung der Transistoren im gesamten Frequenzbereich des Umrichters vermieden wird.

Diese Art der Sollwert-Vorgabe hat jedoch den Nachteil, daß die Transistoren im Frequenzbereich unterhalb der maximal auftretenden Frequenz nicht an ihre zulässige Belastungsgrenze ausgesteuert werden können, so daß nur ein Teil der theoretisch möglichen Umrichterleistung an die Last abgegeben werden kann.

Daher liegt der Erfindung die Aufgabe zugrunde, einen Umrichter der eingangs genannten Art derart weiterzuentwickeln, daß er in jedem Betriebsfall, d. h. bei jeder Betriebsfrequenz seine größtmögliche Leistung an die Last abgibt.

Diese Aufgabe wird erfindungsgemäß dadurch gelöst, daß der Überwachungseinrichtung eine Korrektureinrichtung für den Grenzstrom vorgeordnet ist, mittels der der vorgebbare Grenzstrom bei jeder Betriebsfrequenz des Umrichters derart korrigierbar ist, daß er um einen vorgebbaren Differenzwert vom bei der jeweiligen Frequenz maximal zulässigen Grenzstrom abweicht.

Gemäß der Erfindung wird der Sollwert für den Grenzstrom anstelle des aus dem Stand der Technik bekannten statischen Sollwertes durch einen frequenzabhängigen Sollwert ersetzt. Ausgehend von dem aus der maximal zulässigen Transistorverlustleistung bekannten Verlauf für den maximal zulässigen Transistorstrom in Abhängigkeit von der Frequenz des des Umrichters wird in Abhängigkeit von der aktuellen Betriebsfrequenz des Umrichters mittels der Korrektureinrichtung ein Sollwert für den Grenzstrom berechnet und an die Überwachungseinrichtung ausgegeben. Dabei ist der Grenzstrom bei jeder Frequenz so ausgelegt, daß er nur um einen kleinen Differenzwert vom theoretisch möglichen maximal zulässigen Grenzstrom des Transistors, der durch die Kennlinie festgelegt ist, nach unten abweicht. Somit wird bei jeder Betriebsfrequenz des Umrichters der Transistor voll ausgenutzt.

In einer bevorzugten Ausgestaltung der Erfindung ist der Überwachungseinrichtung eine Anzeigeeinrichtung zugeordnet, deren Eingänge mit dem Ausgang der Strommeßeinrichtung und dem Ausgang der Korrektureinrichtung verbunden sind. Die Anzeigeeinrichtung ermöglicht der Bedienungsperson, bei dem jeweils aktuellen Betriebszustand, d. h. bezogen auf die reale Betriebsfrequenz, festzustellen, wie weit der tatsächliche Transistorstrom von dem für diese Frequenz vorgegebenen Soll-Wert abweicht.

Vorzugsweise wird die Anzeigeeinrichtung durch eine Leuchtdiodenbalkenanzeige gebildet, so daß die Bedienungsperson optisch den Anpassungsgrad der Einrichtung an die zulässigen Parameter feststellen kann.

Die Erfindung wird im folgenden anhand einer Zeichnung näher erläutert.

Dabei zeigen

Figur 1    ein Strom-/ Frequenzdiagramm zur Erläuterung des Standes der Technik,

Figur 2    ein Strom-/ Frequenzdiagramm zur Erläuterung des Ausführungsbeispieles der Erfindung und

Figur 3    ein Blockschaltbild des Ausführungsbeispiels der Erfindung

Figur 1 zeigt prinzipiell den Verlauf des aus der maximal zulässigen Transistorverlustleistung berechneten zulässigen Transistorstromes eines der in den Diagonalzweigen des Parallelschwingkreisumrichters angeordneten Transistoren in Abhängigkeit von der Frequenz.

Der Umrichter wird dabei z. B. für eine Betriebsfrequenz $f_1$ ausgelegt, entsprechend der die Last dimensioniert ist. Durch Fehlanpassungen der Last, beispielsweise dadurch, daß ein nichtgeeigneter Induktor an den Parallelschwingkreisumrichter angeschlossen wird, verändert sich die Betriebsfrequenz des Umrichters zu größeren oder kleineren Frequenzen hin. Da die Leistungsgrenze eines jeden der Transistoren mit steigender Frequenz bei immer niedrigeren Stromwerten erreicht wird, wird beim Stand der Technik eine Überwachungseinrichtung für den Transistorstrom so ausgelegt, daß sie abschaltet, wenn der zu der maximal auftretenden Frequenz $f_{grenz}$ gehörige und aus der Kennlinie berechenbare Grenzstrom $I_{grenz}$ erreicht wird. Um darüber hinaus eine gewisse Sicherheitsreserve zu haben, wird in der Praxis die maximale Grenzfrequenz des Umrichters noch um einen gegenüber dem Wert $f_{grenz}$ erhöhten Wert $f_{grmax}$ ausgelegt, dem ein noch niedrigerer Grenzstrom $I_{gr\ wc}$ entspricht ( = "worst case").

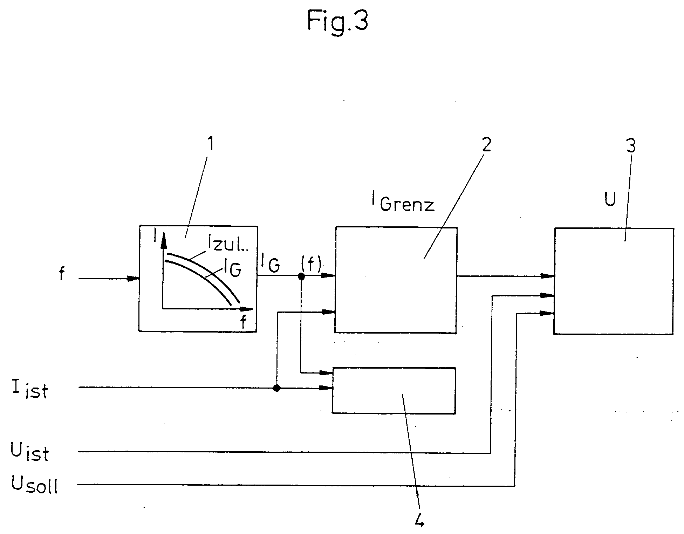

Die erfindungsgemäße Überwachungseinrichtung für den Transistorstrom in den Diagonalzweigen des Parallelschwingkreiumrichters ist im Blockschaltbild gemäß Figur 3 dargestellt. Ein der aktuellen Betriebsfrequenz f des Umrichters entsprechendes Signal wird einer Korrektureinrichtung 1 zugeführt, welche an ihrem Ausgang einen frequenzabhängig korrigierten Soll-Wert für den Grenzstrom $I_G(f)$ auf den Eingang einer Überwachungseinrichtung 2 für den Grenzstrom gibt. Der Überwachungseinrichtung 2 wird an einem weiteren Eingang der von einer Strommeßeinrichtung gemessene Strom-Ist-Wert ($I_{ist}$) zugeführt. Beide letztgenannten Meßgrößen, also der frequenzabhängige Sollwert für den Grenzstrom $I_G(f)$ und der Strom-Ist-Wert $I_{ist}$ werden parallel zu der Überwachungseinrichtung 2 auch einer Anzeigeeinrichtung 4 zugeführt. Der Ausgang der Überwachungseinrichtung 2 wird dem Eingang einer Spannungsregelschaltung 3 zugeführt, welche zusätzlich auch den gemessenen Wert $U_{ist}$ der am Umrichter anliegenden Spannung und einen Sollwert $U_{soll}$ erhält.

Die Korrektureinrichtung 1 arbeitet erfindungsgemäß unter Berücksichtigung der in Figur 2 dargestellten Kennlinie. Dabei entspricht die obere Kennlinie im Strom-/Frequenzdiagramm derjenigen, die auch in Figur 1 abgebildet ist. Die untere Kennlinie entspricht dem frequenzabhängig korrigierten Grenzstromverlauf, der für jede Betriebsfrequenz des Umrichters um einen gleichen Differenzwert unterhalb der Grenzkurve des zulässigen Transistorstromes liegt. Aus der Kenntnis der jeweils gemessenen Frequenz des Umrichters wird gemäß der Erfindung aus dem in Figur 2 dargestellten in der Korrektureinrichtung 1 abgelegten Diagramm der zugehörige Grenzstrom berechnet und im folgenden als Sollwert für die Überwachungseinrichtung 2 vorgegeben. Wie Figur 2 dargestellt ist, ergibt sich somit bei einer Frequenz $f_B$, die einer höheren Frequenz entspricht, ein zugehöriger Grenzstrom $I_B$. Bei einer niedrigeren Betriebsfrequenz des Umrichters $f_A$ ergibt sich, wie Figur 2 zeigt, ein höherer Sollwert $I_A$ für den Grenzstrom. Ein Vergleich der Darstellungen von Figur 2 und Figur 1 zeigt, daß vor allem dann, wenn die aktuelle Betriebsfrequenz deutlich unterhalb der oberen Grenzfrequenz $f_{grenz}$ des Umrichters liegt, eine höhere Auslastung der Transitoren ermöglicht wird, ohne daß diese den zulässigen Grenzstrom, der durch die maximal zulässige Transistorverlustleistung vorgegeben ist, überschreiten.

Die Überwachungseinrichtung 2 gibt nur dann ein Steuersignal an die Spannungsvorgabeeinrichtung 3 ab, wenn der tatsächliche gemessene Transistorstrom oberhalb des frequenzkorrigierten Sollwertes $I_G(f)$ liegt, so daß der Transistor durch Abschalten vor Überlast geschützt wird.

Neben der besseren Auslastung der Transistorleistung hat die erfindungsgemäße Lösung den weiteren Vorteil, daß die Betriebsfrequenz des Umrichters zu höheren Frequenzen hin angehoben werden kann, wenn dies durch den Anwendungsfall bedingt erforderlich ist, ohne daß auch hier die Transistore ihre je nach Frequenz zulässige Verlustleistung überschreiten.

**Patentansprüche**

1. Parallelschwingkreisumrichter mit einem vom Netz versorgten Gleichrichter und einem vom Gleichrichter über einen Zwischenkreis gespeisten Wechselrichter, dessen Diagonalzweige durch Transistoren gebildet werden und an dessen Brückenzweig als Last ein Schwingkreis angeschlossen ist, wobei für jeden Diagonalzweig jeweils eine Strommeßeinrichtung ($I_{ist}$) und eine ihr zugeordnete Überwachungseinrichtung (2) vorgesehen sind, mittels der der Transistor bei Überschreitung eines vorgebbaren Grenzstromes ($I_G$) abschaltbar ist, **dadurch gekennzeichnet,** daß der Überwachungseinrichtung (2) eine Korrektureinrichtung (1) für den Grenzstrom ($I_G$) vorgeordnet ist, mittels der der vorgebbare Grenzstrom ($I_G$) bei jeder Betriebsfrequenz des Umrichters derart korrigierbar ist, daß er um einen vorgebbaren Differenzwert vom bei der jeweiligen Frequenz maximal zulässigen Grenzstrom ($I_{zul}$) abweicht.

2. Umrichter nach Anspruch 1, **dadurch gekennzeichnet,** daß der Überwachungseinrichtung (2) eine Anzeigeeinrichtung (4) zugeordnet ist, deren Eingänge mit dem Ausgang der Strommeßeinrichtung ($I_{ist}$) und dem Ausgang der Korrektureinrichtung (1) verbunden sind.

3. Umrichter nach Anspruch 2, **dadurch gekennzeichnet,** daß die Anzeigeeinrichtung (4) eine Leuchtdiodenbalkenanzeige ist.

## Fig. 1

## Fig. 2

# Fig.3